# DEMANDE DE BREVET EUROPEEN

(11) **EP 3 354 139 A1**
(43) Date de publication de la demande: **01.08.2018**
(21) Numéro de dépôt: 18152867.0
(22) Date de dépôt: 23.01.2018
(51) Int. Cl.: A23K 10/30, A23K 20/174, A23K 20/158, A23K 20/20, A23K 50/30

(54) **COMPLÉMENT ALIMENTAIRE POUR L'ALIMENTATION DE SUIDÉS ET VIANDE ÉQUILIBRÉE EN ACIDES GRAS AINSI OBTENUE**

(30) Priorité: 25.01.2017 BE 175046
(71) Demandeur: Beluga, 9320 Aalst (BE)
(72) Inventeur: Le Jeune d'Allegeershecque, Alexandre, 1150 Woluwe-Saint-Pierre (BE)
(74) Mandataire: Gevers Patents

(57) **Abrégé**

La présente invention porte sur un complément alimentaire destiné à être ajouté à une alimentation pour suidés pour améliorer la qualité nutritive et nutritionnelle de la viande produite, comprenant au moins un composant à base de lin et des vitamines et/ou des antioxydants, ledit complément alimentaire comprenant : une première phase liposoluble contenant de l'huile de lin et au moins une vitamine liposoluble et/ou au moins un antioxydant liposoluble, et une seconde phase en poudre hydrosoluble contenant au moins un antioxydant hydrosoluble, au moins une vitamine hydrosoluble et/ou au moins un oligo-mannosaccharide, le rapport pondéral entre ladite première phase et ladite seconde phase étant compris entre 22/1 et 18/1, de préférence ce rapport sera de 20/1.

## Description

### Domaine de l'invention

La présente invention se rapporte à un complément alimentaire destiné à être ajouté à une alimentation pour suidés, comprenant au moins un composant à base de lin et des vitamines et/ou des antioxydants.

### Etat de l'art

Un tel complément alimentaire est connu de l'état de la technique dès lors que des compléments alimentaires comprenant des graines de lin mélangées à des vitamines et des antioxydants existent et sont destinés à être ajoutés à l'alimentation d'un suidé pour améliorer la qualité nutritive et nutritionnelle de l'alimentation d'un humain (voir par exemple les documents EP 1 867 242, EP 1 021 959 et US 5 069 903).

De nombreuses études ont montré les rôles physiologiques bénéfiques joués chez l'homme par les acides polyinsaturés oméga-3 (ω-3) et oméga 6 (ω-6). En effet, les acides gras ω-3 et ω-6 sont des éléments importants de la membrane cellulaire et synthétisent de nombreux autres composés dans l'organisme qui interviennent, par exemple, dans la régulation de la pression artérielle et dans les réponses inflammatoires. Certaines études mettent en avant une protection par les ω-3 contre les maladies cardiaques et leur effet anti-inflammatoire dans les maladies cardiovasculaires.

On s'intéresse également au rôle que les acides gras ω-3 peuvent jouer dans la prévention du diabète. A titre d'exemple, il a été démontré qu'une consommation régulière d'acides gras ω-3 durant la grossesse ou durant la première année de vie des enfants protège ces derniers du risque de diabète de type 1, la teneur en acides gras ω-3 des membranes musculaires jouant un rôle important dans la résistance à l'insuline.

Enfin, un rôle bénéfique des acides gras polyinsaturés (PUFA) a également été mis en évidence dans certains types de cancers, notamment dans le cancer de la prostate. Dans ce cas, il a été démontré que les acides gras ω-3 inhibent la croissance et la propagation des cellules cancéreuses.

Les acides gras ω-3 et ω-6 sont classés parmi les acides gras « essentiels », c'est-à-dire qu'ils sont indispensables à notre organisme et doivent être exclusivement apportés par l'alimentation. L'acide linoléique (LA), un acide gras ω-6, et l'acide alpha-linolénique (ALA), un acide gras ω-3, sont les précurseurs qui permettent de synthétiser l'ensemble des acides gras ω-3 et ω-6.

L'apport lipidique idéal (via la nutrition) pour un humain doit être constitué d'environ 30 % en acides gras saturés (SFA), 30 % en acides gras monoinsaturés (MUFA) et 30 % en acides gras polyinsaturés (PUFA). Malheureusement, en réalité, les aliments disponibles ainsi que les habitudes alimentaires sont responsables d'un déséquilibre entre ces proportions qui penche plutôt en faveur des SFA (au détriment des PUFA), pouvant être une cause de la formation de cholestérol dans le sang (Hammad et al, Lipids, 2016).

Le document US 5 069 903 divulgue un procédé permettant d'enrichir des produits d'origine animale en acides gras ω-3. Précisément, il a été démontré dans ce document antérieur que l'ajout de graines de lin à de la nourriture conventionnelle pour animaux permet d'augmenter la teneur en acides gras ω-3 de la viande de volaille ou de porc.

Malheureusement, le document US 5 069 903 ne fournit aucune indication concernant la manière de maintenir un rapport équilibré entre les acides gras ω-3 et ω-6 alors que celui-ci est crucial. De même, ce document est silencieux à propos des rapports entre les acides gras saturés et insaturés.

Dans le corps humain, la dégradation des acides gras ω-3 et ω-6 nécessite l'intervention des mêmes enzymes. Ainsi lorsqu'une des deux dégradations est favorisée, les enzymes sont utilisées pour la dégradation d'un type acide gras au détriment de l'autre. Une trop forte concentration en acides gras ω-6 rend le sang moins fluide et augmente donc le risque de problèmes inflammatoires, de cancers et d'infarctus (Sears et al., 2016, Can. J. Diabetes), tandis qu'une trop forte concentration en acides gras ω-3 fluidifie le sang et entraine l'augmentation d'accidents vasculaires cérébraux (Knapp et al., 1997, Am. J. Clin. Nutr.).

Le document EP 1 021 959 présente les mêmes inconvénients que ceux expliqués ci-dessus pour le document US 5 069 903.

### But de l'invention

L'invention a pour but de pallier les inconvénients de l'état de la technique en procurant un complément alimentaire destiné à être ajouté à l'alimentation d'un suidé pour améliorer la qualité nutritive et nutritionnelle de la viande produite, et qui permet un enrichissement simultané en ω-3 et en ω-6 dans la viande de suidé obtenue, tout en maintenant un rapport ω-6/ω-3 dans une plage idéale et sûre pour la santé humaine et en créant un équilibre entre les SFA et les PUFA.

Pour résoudre ce problème, il est prévu suivant l'invention, un complément alimentaire tel qu'indiqué au début, caractérisé en ce qu'il comprend :
- une première phase liposoluble contenant de l'huile de lin et au moins une vitamine liposoluble et/ou au moins un antioxydant liposoluble, et
- une seconde phase en poudre hydrosoluble contenant au moins un antioxydant hydrosoluble, au moins une vitamine hydrosoluble et/ou au moins un oligo-mannosaccharide,
le rapport pondéral entre ladite première phase et ladite seconde phase étant compris entre 22/1 et 18/1, de préférence ce rapport sera de 20/1.

De manière surprenante, le complément alimentaire selon l'invention possède plusieurs avantages. En effet, un tel complément alimentaire qui est ajouté à un aliment de base pour suidés permet d'obtenir une viande ou un dérivé de viande qui présente une proportion en acides gras ω-3, par rapport au poids total de l'aliment, significativement augmentée par rapport aux compléments alimentaires connus dans l'état de la technique. En plus de cet enrichissement supérieur en acides gras ω-3, une viande ou un dérivé de viande obtenu à partir d'un suidé nourri avec le complément alimentaire selon l'invention, possède également un enrichissement significatif en acides gras ω-6. Comme expliqué ci-dessus, un rapport équilibré entre les acides gras ω-3 et ω-6 est crucial pour la santé humaine. Par conséquent, la présente invention permet non seulement d'enrichir une viande ou un dérivé de viande d'un suidé en acides gras ω-3 et ω-6 mais permet également de maintenir un rapport adéquat entre ces deux acides gras, ce qui améliore la qualité nutritive et nutritionnelle de la viande destinée à la consommation humaine.

Il a été démontré, en outre, que le complément alimentaire selon l'invention permet de créer un équilibre entre les SFA et les PUFA. En effet, comme expliqué ci-dessus, il est conseillé que l'apport lipidique pour un humain soit constitué d'environ 30 % en SFA, 30 % en MUFA et 30 % en PUFA. Cependant, en pratique, ces proportions idéales sont loin d'être respectées et penchent plutôt en faveur des SFA (au détriment des PUFA), responsables de nombreux problèmes de santé.

Ainsi, le complément alimentaire selon l'invention qui, d'une part, enrichit une viande ou un dérivé de viande d'un suidé en acides gras ω-3 et ω-6, va, d'autre part, créer un équilibre idéal entre la proportion en SFA et la proportion en PUFA, ceci améliorant par conséquent la qualité nutritive et nutritionnelle de la viande destinée à la consommation humaine.

Avantageusement, selon l'invention, ladite première phase et ladite deuxième phase du complément alimentaire sont conditionnées dans un contenant unique sous la forme d'un mélange. Ce mélange peut ensuite être ajouté par l'éleveur à l'aliment de base pour suidés.

De préférence, selon l'invention, ladite première phase et ladite deuxième phase du complément alimentaire sont conditionnées séparément dans deux contenants distincts. Les phases sont alors mélangées séparément à l'aliment de base pour suidés. Elles peuvent aussi être mélangées mutuellement juste avant leur intégration dans l'aliment de base pour suidés.

Dans une forme de réalisation particulièrement avantageuse du complément alimentaire selon l'invention, il comprend, en plus de l'huile de lin, une teneur en au moins une vitamine liposoluble et/ou en au moins un antioxydant liposoluble supérieure à 0% et inférieure ou égale à 1 % en poids de ladite première phase. Les antioxydants et/ou les vitamines liposolubles contenus dans la première phase du complément alimentaire selon l'invention permettent de protéger l'huile de lin contre l'oxydation et d'optimiser sa métabolisation par l'animal. Cette phase liposoluble se présente sous la forme liquide.

Avantageusement, selon l'invention, ladite première phase comprend, comme vitamine liposoluble, de la vitamine E. Une viande ou un dérivé de viande obtenu à partir d'un suidé nourri avec le complément alimentaire selon l'invention présente un enrichissement en vitamine E, connue comme étant bénéfique pour la santé.

De plus, dans une forme de réalisation particulière ladite première phase comprend au moins un antioxydant liposoluble susdit choisi parmi le groupe constitué de l'hydroxytoluène butylé, de l'hydroxyanisole butylé, du gallate de propyle, de l'acide citrique et de leurs mélanges.

De préférence, selon l'invention, ladite seconde phase comprend au moins un antioxydant hydrosoluble susdit choisi parmi le groupe constitué de la vitamine C, de polyphénols, de l'iode, du sélénium et de leurs mélanges.

Dans une forme de réalisation particulièrement avantageuse du complément alimentaire selon l'invention, ladite seconde phase comprend au moins une vitamine hydrosoluble susdite choisie parmi le groupe constitué de la vitamine B6, de la vitamine B9, de la vitamine B12, de la vitamine K3 et de leurs mélanges. Les vitamines hydrosolubles B6, B9 et B12 neutralisent l'éventuelle présence de facteurs anti-nutritionnels. La vitamine hydrosoluble K3 diminue le risque d'hémorragies dans les élevages.

D'autres formes de réalisation d'un complément alimentaire selon l'invention sont indiquées dans les revendications annexées.

L'invention a aussi pour objet un aliment pour suidés comportant des matières nutritives comprenant des protéines et/ou des matières grasses et/ou des sucres et/ou des amidons et/ou de la cellulose et/ou des minéraux, ledit aliment comprenant en outre un complément alimentaire selon l'invention.

De préférence, selon l'invention, ladite première phase dudit complément alimentaire selon l'invention représente 4,5 à 5,5 % en poids de l'aliment, de préférence 5 % en poids de l'aliment et ladite seconde phase dudit complément alimentaire selon l'invention représente 0,225 à 0,275 % en poids de l'aliment, de préférence 0,25 % en poids de l'aliment.

D'autres formes de réalisation d'un aliment pour suidé selon l'invention sont indiquées dans les revendications annexées.

L'invention a aussi pour objet une viande ou un dérivé de viande provenant d'un suidé, ladite viande ou ledit dérivé de viande présentant :
- une proportion en acides gras ω-6 comprise entre 10 et 30 % en poids des acides gras de la viande, de préférence entre 10 et 25 % en poids des acides gras de la viande,
- une proportion en acides gras ω-3 comprise entre 10 et 30 % en poids des acides gras de la viande, de préférence entre 10 et 20 % en poids des acides gras de la viande,
- un rapport acides gras ω-6/ω-3 compris entre 0,5 et 1,5, de préférence entre 0,8 et 1,2, et
- un rapport SFA/PUFA compris entre 0,5 et 1,5, de préférence entre 0,8 et 1,2.

D'autres formes de réalisation d'une viande ou d'un dérivé de viande selon l'invention sont indiquées dans les revendications annexées.

L'invention a aussi pour objet une utilisation d'un complément alimentaire selon l'invention destiné à être ajouté à l'alimentation des suidés pour améliorer la qualité nutritive et nutritionnelle de la viande obtenue.

L'invention a aussi pour objet une utilisation d'un aliment pour suidés selon l'invention pour améliorer la qualité nutritive et nutritionnelle de l'alimentation d'un humain.

L'invention a aussi pour objet une utilisation d'une viande ou d'un dérivé de viande selon l'invention pour améliorer la qualité nutritive et nutritionnelle de l'alimentation d'un humain.

D'autres formes d'utilisation d'un complément alimentaire, d'un aliment pour suidés ou d'une viande ou d'un dérivé de viande selon l'invention sont indiquées dans les revendications annexées.

D'autres caractéristiques, détails et avantages de l'invention ressortiront des exemples donnés ci-après, à titre non limitatif.

### Modes de réalisation selon l'invention

### Exemples

### Exemple 1 :

Le tableau 1 reprend un exemple de composition de la première phase liposoluble du complément alimentaire selon l'invention. Les valeurs sont exprimées en pourcentage en poids de la première phase liposoluble.

**Tableau 1 :**

| | |
|---|---|
| Huile de lin | ≥ 99 % |
| Antioxydants et vitamines liposolubles | ≤ 1 % |
| - Vitamine E | 0,3 ± 10 % |
| - Hydroxytoluène butylé | 0,0225 ± 10 % |
| - Hydroxyanisole butylé | 0,0025 ± 10 % |
| - Gallate de propyle | 0,0012 ± 10 % |

Le tableau 2 reprend un exemple de composition de la seconde phase hydrosoluble du complément alimentaire selon l'invention. Les valeurs sont exprimées en gr, pour un total de 100 gr.

**Tableau 2 :**

| | |
|---|---|
| Humidité | < 8 |
| Lipides | 3 ± 1 |
| Azote | 1,5 ± 1 |
| Cendres | 45 ± 5 |
| Vitamine C | 4 ± 1 |
| Vitamine K3 | 0,4 ± 0,1 |
| Vitamine B6 | 0,4 ± 0,1 |
| Vitamine B9 | 0,08 ± 0,02 |
| Vitamine B12 | 0,0032 ± 0,0008 |
| Sélénium | 0,007 ± 0,002 |
| Iode | 0,076 ± 0,004 |
| Polyphénols | > 1,2 |

### Exemple 2 :

A l'âge de minimum 5 mois et à un poids compris entre 55 et 60 kg, les porcs reçoivent l'aliment selon l'invention durant les 15 dernières semaines avant l'abattage. La consommation en aliment selon l'invention des porcs est telle qu'ils atteignent 120 kg lors de l'abattage.

Un exemple de composition des rations alimentaires administrées aux porcs est donnée dans le tableau 3.

**Tableau 3 :**

| **Matières premières** | **Pourcentage en poids de l'aliment** |
|---|---|
| Choline | 0,05 ± 5 % |
| Craie | 1,42 ± 5 % |
| Vitamines et oligoéléments | 0,25 ± 5 % |
| Sel | 0,30 ± 5 % |
| Phosphate monocalcique | 0,02 ± 5 % |
| D, L-methionine | 0,06 ± 5 % |
| L-threonine | 0,08 ± 5 % |
| L-lysine | 0,11 ± 5 % |
| Blé | 6,85 ± 5 % |
| Pois | 17,44 ± 5 % |
| Rébulet | 10,00 ±5% |
| Soja | 10,12 ± 5 % |
| Orge | 32,07 ± 5 % |
| Amyfeed ou Milurex | 15,00 ± 5 % |
| Mélasse de canne | 1,93 ± 5 % |
| Phytase, 10% | 0,10 ± 5 % |
| Deuxième phase hydrosoluble | 0,25 ± 10 % |
| Première phase liposoluble | 5 ± 10 % |
| Total | 100 |

Des analyses ont été réalisées sur de la viande ainsi que sur des dérivés de viande provenant de différentes parties de porcs nourris avec l'aliment dont la composition est reprise dans le tableau 3. Les recettes de ces dérivés de viande ont été spécialement étudiées pour maintenir un équilibre ω-6/ω-3, SFA/PUFA ainsi que leur quantité absolue. Les paramètres suivants ont été mesurés: proportions en acides gras saturés, acides gras polyinsaturés, ω-3 et ω-6.

Le tableau 4 reprend les résultats obtenus suite à ces analyses ainsi que les valeurs correspondantes pour un dérivé de viande provenant d'un porc nourri avec un aliment de base (contrôle).

**Tableau 4 :**

| | **Contrôle** | **Boudin noir** | **Boudin blanc** | **Gras dorsal** | **Jambon cuit** | **Saucisson** | **Saindoux** | **Lard gras** |
|---|---|---|---|---|---|---|---|---|
| **SFA(%)** | 38,15 | 31,37 | 31,74 | 29,85 | 31,94 | 31,82 | 39,14 | 30,25 |
| **PUFA(%)** | 14,41 | 30,82 | 30,21 | 34,72 | 30,30 | 29,6 | 29,21 | 39,03 |
| **SFA/PUFA** | 2,65 | 1,02 | 1,05 | 0,86 | 1,05 | 1,08 | 1,34 | 0,78 |
| **ω-3** (%) | 1,27 | 13,22 | 13,25 | 17,56 | 13,42 | 14,52 | 14,34 | 18,27 |
| **ω-6(%)** | 12,99 | 17,41 | 16,76 | 16,94 | 16,78 | 14,94 | 14,84 | 20,60 |
| **ω-6/ω-3** | 10,23 | 1,32 | 1,26 | 0,96 | 1,25 | 1,03 | 0,97 | 1,13 |

Comme il ressort de ces analyses, une viande ou un dérivé de viande obtenu à partir d'un porc nourri avec le complément alimentaire selon l'invention présente simultanément une proportion en ω-3 et en ω-6 augmentée, tout en maintenant un rapport ω-6/ω-3 compris entre 0,5 et 1,5. De par cette augmentation, un équilibre se crée entre les acides gras saturés et les acides gras polyinsaturés, ce qui se traduit via un rapport SFA/PUFA compris entre 0,5 et 1,5.

Ces résultats mettent en évidence un avantage du complément alimentaire selon l'invention. En effet, le complément alimentaire suivant l'invention enrichit une viande ou un dérivé de viande d'un suidé en ω-3 et en ω-6, permettant ainsi de maintenir un ratio ω-6/ω-3 idéal et sûre pour la santé humaine et de créer un équilibre entre les SFA et les PUFA, ceci permettant d'améliorer la qualité nutritive et nutritionnelle de l'alimentation d'un humain.

Il est bien entendu que la présente invention n'est en aucune façon limitée aux formes de réalisations décrites ci-dessus et que bien des modifications peuvent y être apportées sans sortir du cadre des revendications annexées.

### LISTE DES ABRÉVIATIONS

ω-3 : acides gras oméga-3
ω-6 : acides gras oméga-6
PUFA : acides gras polyinsaturés
SFA : acides gras saturés
MUFA : acides gras monoinsaturés

## Revendications

1. Complément alimentaire destiné à être ajouté à une alimentation pour suidés, comprenant au moins un composant à base de lin et des vitamines et/ou des antioxydants, **caractérisé en ce qu'**il comprend :
- une première phase liposoluble contenant de l'huile de lin et au moins une vitamine liposoluble et/ou au moins un antioxydant liposoluble, et
- une seconde phase en poudre hydrosoluble contenant au moins un antioxydant hydrosoluble, au moins une vitamine hydrosoluble et/ou au moins un oligo-mannosaccharide,
le rapport pondéral entre ladite première phase et ladite seconde phase étant compris entre 22/1 et 18/1, de préférence ce rapport sera de 20/1.

2. Complément alimentaire selon la revendication 1, **caractérisé en ce que** ladite première phase et ladite deuxième phase sont conditionnées dans un contenant unique sous la forme d'un mélange.

3. Complément alimentaire selon la revendication 1, **caractérisé en ce que** ladite première phase et ladite deuxième phase sont conditionnées séparément dans deux contenants distincts.

4. Complément alimentaire selon l'une quelconque des revendications 1 à 3, **caractérisé en ce qu'**il comprend, en plus de l'huile de lin, une teneur en au moins une vitamine liposoluble et/ou en au moins un antioxydant liposoluble supérieure à 0% et inférieure ou égale à 1 % en poids de ladite première phase.

5. Complément alimentaire selon l'une quelconque des revendications 1 à 4, **caractérisé en ce que** ladite première phase comprend, comme vitamine liposoluble, de la vitamine E.

6. Complément alimentaire selon l'une quelconque des revendications 1 à 5, **caractérisé en ce que** ladite première phase comprend au moins un antioxydant liposoluble susdit choisi parmi le groupe constitué de l'hydroxytoluène butylé, de l'hydroxyanisole butylé, du gallate de propyle, de l'acide citrique et de leurs mélanges.

7. Complément alimentaire selon l'une quelconque des revendications 1 à 6, **caractérisé en ce que** ladite seconde phase comprend au moins un antioxydant hydrosoluble susdit choisi parmi le groupe constitué de la vitamine C, de polyphénols, de l'iode, du sélénium et de leurs mélanges.

8. Complément alimentaire selon l'une quelconque des revendications 1 à 7, **caractérisé en ce que** ladite seconde phase comprend au moins une vitamine hydrosoluble susdite choisie parmi le groupe constitué de la vitamine B6, de la vitamine B9, de la vitamine B12, de la vitamine K3 et de leurs mélanges.

9. Aliment pour suidés comportant des matières nutritives comprenant des protéines et/ou des matières grasses et/ou des sucres et/ou des amidons et/ou de la cellulose et/ou des minéraux, **caractérisé en ce qu'**il comprend en outre un complément alimentaire selon l'une quelconque des revendications 1 à 8.

10. Aliment selon la revendication 9, **caractérisé en ce que** ladite première phase dudit complément alimentaire, représente 4,5 à 5,5 % en poids de l'aliment, de préférence 5 % en poids de l'aliment et **en ce que** ladite seconde phase dudit complément alimentaire représente 0,225 à 0,275 % en poids de l'aliment, de préférence 0,25 % en poids de l'aliment.

11. Viande ou dérivé de viande provenant d'un suidé, **caractérisé en ce que** ladite viande ou ledit dérivé de viande présente :
- une proportion en acides gras ω-6 comprise entre 10 et 30 % en poids des acides gras de la viande, de préférence entre 10 et 25 % en poids des acides gras de la viande,
- une proportion en acides gras ω-3 comprise entre 10 et 30 % en poids des acides gras de la viande, de préférence entre 10 et 20 % en poids des acides gras de la viande,
- un rapport acides gras ω-6/ω-3 compris entre 0,5 et 1,5, de préférence entre 0,8 et 1,2, et
- un rapport SFA/PUFA compris entre 0,5 et 1,5, de préférence entre 0,8 et 1,2.

12. Utilisation d'un complément alimentaire selon l'une quelconque des revendications 1 à 8 destiné à être ajouté à l'alimentation des suidés pour améliorer la qualité nutritive et nutritionnelle de la viande obtenue.

13. Utilisation d'un aliment pour suidés selon la revendication 9 ou 10 pour améliorer la qualité nutritive et nutritionnelle de l'alimentation d'un humain.

14. Utilisation d'une viande ou d'un dérivé de viande selon la revendication 11 pour améliorer la qualité nutritive et nutritionnelle de l'alimentation d'un humain.
